Europäisches Patentamt

European Patent Office

Office européen des brevets

(19)

(11) **EP 0 519 927 B1**

(12) **EUROPÄISCHE PATENTSCHRIFT**

(45) Veröffentlichungstag und Bekanntmachung des Hinweises auf die Patenterteilung:
**01.04.1998 Patentblatt 1998/14**

(21) Anmeldenummer: **91901513.1**

(22) Anmeldetag: **14.01.1991**

(51) Int Cl.6: **D02G 3/48**, D01F 11/08, D01F 6/62, D06M 15/693

(86) Internationale Anmeldenummer:
**PCT/CH91/00012**

(87) Internationale Veröffentlichungsnummer:
**WO 92/12287 (23.07.1992 Gazette 1992/19)**

(54) **VERFAHREN ZUR HERSTELLUNG EINES PRÄADHÄRISIERTEN POLYESTERFILAMENTS UND REIFENKORD AUS DIESEM POLYESTERFILAMENT**

METHOD OF PRODUCING A PRE-ADHERED POLYESTER FILAMENT, AND TYRE-PLY CORD MADE FROM THIS FILAMENT

PROCEDE DE FABRICATION D'UN FILAMENT DE POLYESTER A PRE-ADHERENCE ET NAPPE DE PNEUMATIQUE REALISEE AVEC CE FILAMENT DE POLYESTER

(84) Benannte Vertragsstaaten:
**CH DE ES FR GB IT LI LU NL SE**

(43) Veröffentlichungstag der Anmeldung:
**30.12.1992 Patentblatt 1992/53**

(73) Patentinhaber: **RHONE-POULENC FILTEC AG**
**6021 Emmenbrücke (CH)**

(72) Erfinder:
• **REINTHALER, Peter**
**CH-6206 Neuenkirch (CH)**
• **MÜLLER, Armin**
**CH-6020 Emmenbrücke (CH)**

(74) Vertreter: **Herrmann, Peter Johannes**
**c/o Rhône-Poulenc Viscosuisse SA**
**Patentabteilung IB**
**6021 Emmenbrücke (CH)**

(56) Entgegenhaltungen:
WO-A-84/03707          CH-A- 677 499
DE-A- 1 444 141        US-A- 3 383 242
US-A- 4 247 658

• WPIL, FILE SUPPLIER, AN=89-096658, Derwent Publications Ltd, (London, GB), & JP,A,1044302 (YOKOHAMA RUBBER K.K.) 16. Februar 1989, see the whole document

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft ein Verfahren zur Herstellung eines präadhärisierten Polyesterfilaments mit Hafteigenschaften an Gummi, wobei ein Präadhärisierungsmittel vor dem Verstrecken aufgetragen wird, sowie das präadhärisierte Polyesterfilament und den daraus hergestellten Reifenkord.

Die Präadhärisierung zur Herstellung von schrumpfarmen Polyesterfäden, welche auch für technische Zwecke hochfest und dehnungsarm sind, sind bekannt. So wird in der WO-A-84/03707 ein Verfahren beschrieben, bei welchem die Hafteigenschaften an Gummi durch den Auftrag eines Polyepoxids und eines tertiären Amins als Katalysator auf Polyesterfilament nach der Verstreckung aufgetragen wird. Dabei ist die Menge des zugegebenen Katalysators von grosser Bedeutung. Das Aufbringen von Präadhärisierungsmittel auf unverstreckte Fäden wird lediglich allgemein erwähnt (s.9, z. 24-28)

Ein kombiniertes Verfahren zur gleichzeitigen Wärmebehandlung und Verstreckung von unverstreckten oder vollständig verstreckten Garnen ist aus der DE-A-20 56 707 bekannt. Diese Art der Behandlung ist bei Spinngeschwindigkeiten unter 1000 m/min möglich. Bei höheren Spinngeschwindigkeiten wie sie im POY-Bereich zur Anwendung gelangen, verschmutzen nach der Applikation eines Präadhärisierungsmittels die Steck- und Spulaggregate so rasch, dass eine wirtschaftliche Arbeitsweise verunmöglicht wird.

Auch die US-A-4 247 658 beschreibt, gleich wie die DE-A-2 056 707, ein Spinnstreckverfahren, bei welchem ein Präadhärisierungsmittel zusammen mit einer Spinnpräparation, die als Härtungsmittel ein Epoxyharz enthält, aufgetragen. Zwischen dem Spinnen und Verstrecken ist gleichfalls keine Reifung vorgesehen.

Nach der aus der WO-A-84/03707 bekannten US-A-3 383 242 erfolgt das Auftragen eines Haftungsmittels zusammen mit der Spinnpräparation. Das auf diese Weise imprägnierte Garn wird aufgespult und in einem folgenden, getrennten Verfahrensschritt, bei etwa 225°C heiss verstreckt. Das Verstrecken erfolgt langsam. Es sind keine Spinngeschwindigkeiten angegeben. Bei der Heissluftbehandlung unter Krafteinwirkung auf den Faden werden hohe Temperaturen im Bereich von 160°C und 225°C genannt, die bekanntlich zu einer Schädigung des Garns führen können.

Die DE-A-1 444 141 entspricht in etwa der US-A-4 247 658. Das Ausgangsmaterial ist kein POY. Spinngeschwindigkeiten sind nicht offenbart. Die Temperaturbehandlung erfolgt im Bereich von 160-245°C während 2-330 Sekunden und dient dem Verstreckungsprozess.

Das Präadhärisier mittel kann vor oder nach dem Vertrecken auf die PET-Filamente aufgebracht werden.

Die JP-A-1-044 302 beschreibt die Herstellung von Reifenkorden aus mit hoher geschwindigkeit gesponnenen PET-Fasern.

Die bekannten Verfahren lösen die Probleme eines Reifenkords nur teilweise, d.h., die Hafteigenschaften der Polyesterfilamente an Gummi werden zwar verbessert, aber ein daraus hergestellter Kord ist nicht a priori dimensionsstabil.

Die Herstellung eines dimensionsstabilen PET-Kords setzt die Erspinnung eines vororientierten, teilverstreckten Fadens (POY) voraus. Dies kann durch Anheben der Spinngeschwindigkeit erreicht werden. Zwar wurden Wege vorgeschlagen, die Spinngeschwindigkeit dadurch niedrig zu halten, dass der Filamenttiter verringert wird, doch steigt damit die Zahl der in einem Multifilament vereinten Einzelfilamente stark an, so dass vermehrt Fibrillenbrüche beim Verstrecken auftreten können. Hält man hingegen den Filamenttiter zwischen 4.4 bis 6 dtex/Filament, so kann eine ausreichende Dimensionsstabilität am Kord nur erzielt werden, wenn das POY bei hohen Geschwindigkeiten (> 2500 m/min) gesponnen wird.

Obwohl das Reststreckverhältnis mit zunehmender Spinngeschwindigkeit sinkt, steigen die Umfangsgeschwindigkeiten der Streckrollen und der Aufspulaggregate bei diesem Prozess stetig an. Damit sind dem Spinnstreckprozess sowohl technische beispielsweise geschwindigkeitsbedingte, als auch ökonomische verschleissbedingte Grenzen gesetzt.

Die Verstreckung in einem zweiten, von der Spinnung des POY separierten, langsameren Verfahrensschritt wäre daher eine sehr gute Alternative zur Herstellung dimensionssta biler PET-Korde. Der Auftrag der die Adhäsion verbessernden Substanzen erst bei der Aufspulung des verstreckten Garns ist wäre jedoch aufwendig und unwirtschaftlich.

Aufgabe der Erfindung ist es, ein Verfahren zu schaffen, welches es ermöglicht ein Polyesterfilamentgarn mit verbesserter Gummihaftung für einen Reifenkord wirtschaftlich herzustellen, der auch eine ausgezeichnete Dimensionsstabilität aufweist.

Die Aufgabe wird erfindungsgemäss dadurch gelöst, dass nach dem Auftrag einer Spinnpräparation 0.05 bis 0.20 Gew.% des Präadhärisierungsmittels, bezogen auf das Polyesterfilament, in einer ersten Verfahrensstufe auf ein mit wenigstens 3200 m/min gesponnenes Polyesterfilament (POY) aufgetragen werden, das POY, das einen Kochschrumpf < 20 % aufweist, anschliessend aufgespult, in einer weiteren Verfahrensstufe auf der POY-Spule bei 50-90°C während 3-5 Tagen heissluftbehandelt und in einer weiteren Verfahrensstufe abgespult, einstufig verstreckt und anschliessend aufgewickelt wird.

Das Auftragen des Präadhärisierungsmittels auf einen teilverstreckten Faden hat den Vorteil, dass das Präadhärisierungsmittel tiefer in die Fadenmatrix eindringt, was die Adhäsionswirkung verbessert.

Diese Verfahrensweise allein löst jedoch noch nicht die Verschmutzung der vom frisch präadherisierten Faden in den Folgeoperationen bestrichenen Kontaktflächen. Überraschend wurde gefunden, dass eine vor dem Verstrecken durchgeführte Heissluftbehandlung des POY die Verschmutzung der beim Verstrecken bestrichenen Kontaktflächen (Rollen, Heizer) verhindert. Die Heissluftbehandlung wird bei Temperaturen zwischen 50 und 90°C, mit Rücksicht auf die Behandlungsdauer bevorzugt zwischen 60 und 90°C durchgeführt. Bei diesen Temperaturen ist das Schrumpfen des POY unvermeidlich.

Es wurde gefunden, dass dies erfindungsgemäß ohne Nachteile für die Weiterverarbeitung möglich ist, wenn ein POY vorgelegt wird, welches einen Kochschrumpf von weniger als 20 %, bevorzugt 8-18 %, insbesondere 10-15 % aufweist und aus einer Polyesterschmelze (> 85 % Polyethylenterephthalat) bei Abzugsgeschwindigkeiten von 3400-4000 m/min, insbesondere 3500 m/min gesponnen wurde.

Aufgrund der am unverstreckten Filament vorliegenden Doppelbrechung und des Kochschrumpfes kann dieses als teilkristallines POY betrachtet werden. Im Gegensatz zu anderen POY lässt sich dieses Dank des tiefen Kochschrumpfes einer Heissluftbehandlung unterziehen ohne die guten Eigenschaften zu verlieren.

Die Heissluftbehandlung des teilverstreckten präadhärisierten Polyesterfilaments erfolgt erfindungsgemäß auf der POY-Spule bei 50-90°C, insbesondere bei 60-80°C, bevorzugt bei 70°C, während 3 bis 5 Tagen. Eine längere Behandlungsdauer ist unwirtschaftlich.

Ist der Kochschrumpf zu hoch, so entstehen bei der Heissluftbehandlung zu hohe Schrumpfkräfte, was eine starke Deformierung der Wickel und der Hülsen zur Folge hat. Deformierte Wickel lassen sich nicht mehr gut abarbeiten.

Überraschend ist auch, dass aus einem derart hoch orientierten POY nicht nur ein hervorragend dimensionsstabiler Kord hergestellt werden kann, sondern auch, dass dieses POY auf sehr einfache Weise verstreckt werden kann: es genügt eine einzige Streckzone, bestehend aus einem kalten Lieferwerk, einer Streckpunktfixierung, z.B. einem Streckstift, einer zur Einbringung der Wärme geeigneten Heizung, z.B. eine heisse Platte, einem kalten Streckwerk und einer Aufspulvorrichtung.

Ist der Kochschrumpf zu hoch, ist diese Art Verstreckung mit Schwierigkeiten verbunden. Ist der Kochschrumpf zu niedrig, so steigt zwar die Dimensionsstabilität leicht an, das Verfahren wird aber zunehmend unökonomisch, weil das Streckverhältnis und damit die Maschinenleistung unverhältnismässig rascher sinken als der Kochschrumpf.

Das resultierende präadhärisierte Polyesterfilamentgarn weist gleichzeitig folgende Eigenschaften auf:

| Festigkeit | 60-70 cN/tex |
|---|---|
| Thermoschrumpf nach Tempern bei 235°C, gemessen bei 190°C (=TST) | <3.5 % |
| Dimensionsstabilität DS von | >24000 cN$^2$/tex$^2$ |

Beim TST wird eine konditionierte Fadenprobe unter einer Last von 0.4 cN/dtex während 1 Minute einer Temperatur von 235°C ausgesetzt. Anschliessend reduziert man die Belastung auf 0.01 cN/dtex und lässt die Probe auf Zimmertemperatur abkühlen. Schliesslich heizt man die selbe Probe unter Beibehaltung der Belastung mit einem Temperaturgradienten von 20 K/min auf und misst die Restschrumpfung bei 190°C.

Die DS dient als Mass eines Multifilaments für voraussichtliche Dimensionsstabilität des imprägnierten Kords. Je höher die DS desto dimensionsstabiler wird der imprägnierte Kord ausfallen.

$$DS = \frac{\text{Festigkeit} \cdot \text{Spez. Anfangsmodul}}{TST}$$

Das präadhärisierte Polyesterfilamentgarn dient als Zwischenprodukt zur Herstellung des erfindungsgemäßen Reifenkordes, welcher nach der Präparation aus einem vulkanisierten fertigen Reifen folgende Merkmale aufweist:

eine Gummihaftung (Pull) von 18 daN bis 25 daN, eine Appearance Note von 2.5 bis 4.0 und eine Dimensionsstabilität von mehr als 24000 cN$^2$/tex$^2$. Zudem ist die Reisskraft des imprägnierten Kords grösser oder mindestens gleich gross wie diejenige des nicht imprägnierten Rohkords.

Das Verfahren soll schematisch anhand einer Zeichnung näher beschrieben werden.

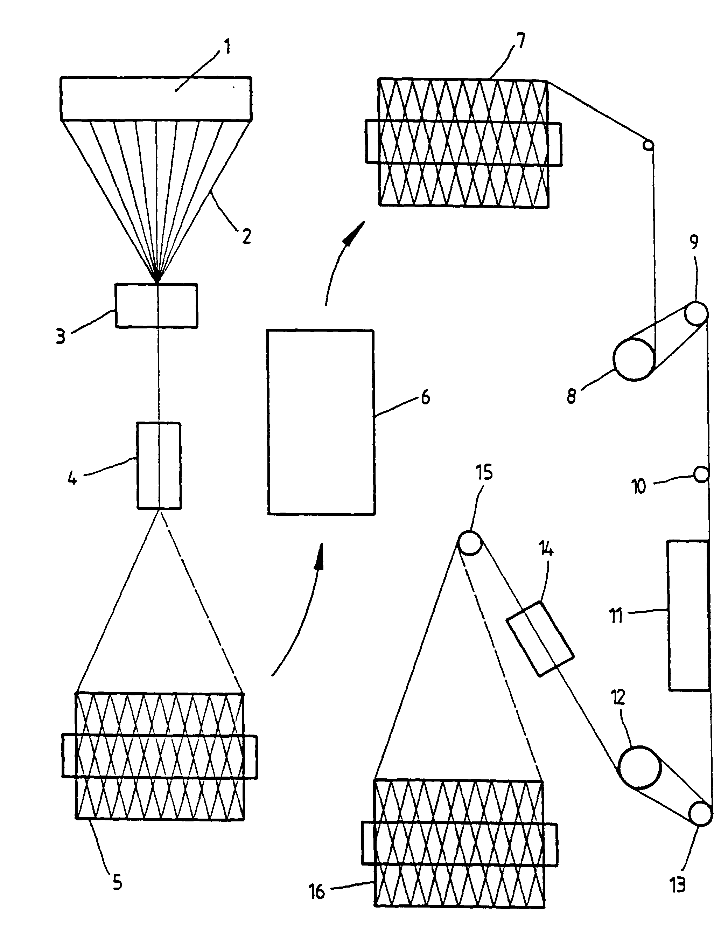

In der Zeichnung ist mit Ziffer 1 ein Spinnblock dargestellt. Filamente 2 einer Fadenschar werden in bekannter Weise zusammengefasst und mit einer Spinnpräparation 3 versehen. Der durch die Aufwicklung des Filaments 2 mittels einer Spule 5 beispielsweise bei 3500 m/min entstehende Faden ist teilverstreckt und wird als partiell orientiertes Polyesterfilamentgarn (POY) bezeichnet. Auf diesen teilverstreckten mit einer Geschwindigkeit von 3500 m/min abgezogenen Faden wird eine Präadhärisierung 4 aufgetragen. Die resultierende POY-Spule 5 wird in einer Reifekammer 6 bei etwa 70°C mehrere Tage lang heissluftbehandelt. Es resultiert eine Spule 7 mit ausgereiftem POY. Von der Spule 7 wird der gereifte POY-Faden mittels einer Einzugsrolle 8 mit Abstandsrolle 9, einem Streckstift 10, einem Bügeleisen 11, einer Abzugsrolle 12 und einer weiteren Abstandsrolle 13 geführt. Die mit einem nicht gezeigten Motor angetriebene

EP 0 519 927 B1

Abzugsrolle 12 zieht den Faden mit einer Geschwindigkeit von mindestens 200 m/min über den Streckstift 10 und das auf etwa 240°C beheizte Bügeleisen ab. Diese Geschwindigkeit ist 1.7-2.2 mal grösser als die Einlaufgeschwindigkeit (= Geschwindigkeit Rolle 8).

Das verstreckte Polyesterfilamentgarn kann noch über eine Verwirbelungseinrichtung 14 verwirbelt, über eine Umlenkrolle 15 umgelenkt und auf eine Spule 16 aufgewickelt werden.

Beispiele 1-2

PET-Granulat, bestehend aus Ethylenterephthalat-Einheiten als Hauptkomponente, mit einer intrinsischen Viskosität (IV) von 0.65 (bestimmt als Lösung in Phenol/Tetrachlorethan) wurde im festen Zustand auf eine IV von 1.0 nachkondensiert. Das Granulat wurde in einem Extruder bei 290°C aufgeschmolzen und in üblicher Weise mittels Zahnradpumpen dosiert und bei etwa 310°C durch eine Spinndüse mit einer Vielzahl von Kapillarbohrungen gepresst. Der Durchmesser der Kapillaren betrug 0.4 mm, deren Länge 1.6 mm. Das sich ergebende Filamentbündel wurde zunächst in einem rohrförmigen Nacherhitzer konditioniert und anschliessend in gewohnter Weise mit Luft gekühlt, mit einer Spinnpräparation beaufschlagt, konvergiert und bei einer Geschwindigkeit zwischen 3200 m/min und 3800 m/min aufgewickelt. Die genaue Geschwindigkeit kann entsprechend der verwendeten Apparatur, der Lufttemperatur, Luftfeuchtigkeit, Durchsatz und Spinntiter variieren.

Die Wickel wurden einer Heissluftbehandlung bei 70°C während 3 Tagen unterworfen. Anschliessend wurden die Multifilamente nach dem erfindungsgemässen Verfahren einstufig verstreckt und zu einem Rohkord (1100 Z492) x2 S492 bzw. (1440 Z394) x2 S394 verzwirnt und in der Folge einbadig imprägniert.

Die Imprägnierung erfolgte auf einer Kleinimprägniermaschine (Computreater der Firma LITZLER) nach folgendem Schema:

```
                            Trocken-   Streck-    Relaxier-   Imprägn.
    Rohkord -> DIP -> ofen      -> ofen     -> ofen       -> Kord

                            K₁,T₁,t₁   K₂,T₂,t₂   K₃,T₃,t₃
```

K steht für Fadenzugkraft
T für Temperatur und
t für Verweilzeit

DIP : 16% Resorcinol-Formaldehyd-Latex
Dabei wurden die nachstehenden Bedingungen eingehalten:

| Beispiel Nr. | | 1 | 2 |
|---|---|---|---|
| Fadenzugkraft | [cN] | | |
| $K_1$ | | 300 | 300 |
| $K_2$ | | 1200 | 1600 |
| $K_3$ | | 400 | 520 |
| Temperaturen | [°C] | | |
| $T_1$ | | 160 | 160 |
| $T_2$ | | 240 | 240 |
| $T_3$ | | 220 | 220 |
| Verweilzeit | [s] | | |
| t1 | | 45 | 45 |
| t2 | | 45 | 45 |
| t3 | | 63 | 63 |

Bei diesen Imprägnierbedingungen wurde der Kord bei 240°C unter einer Spannung von 0.45-0.5 cN/dtex nachverstreckt und gegen eine Spannung von 0.1 cN/dtex bei 220°C relaxiert.

4

| Eigenschaftstabelle zu den Beispielen 1-2 | | | |
|---|---|---|---|
| Beispiel Nr. | | 1 | 2 |
| POY | | | |
| Spinngeschw.[m/min] | | 3500 | 3500 |
| Kochschrumpf | [%] | 8.2 | 17.3 |
| Doppelbrechung | | 0.089 | 0.068 |
| Faden verstreckt | | | |
| Titer | [dtex] | 1100 | 1440 |
| Viskosität | [dl/g] | 0.90 | 0.92 |
| Reisskraft | [N] | 75.7 | 99.7 |
| Festigkeit | [cN/tex] | 67.5 | 69.3 |
| Bruchdehnung | [%] | 11.2 | 10.4 |
| TST bei 190°C | [%] | 3.1 | 3.3 |
| DS | $[cN^2/tex^2]$ | 25890 | 27120 |
| Doppelbrechung | | 0.182 | 0.193 |
| Rohkord | | | |
| Zwirn      [U/m] | Z/S | 492/492 | 394/394 |
| Titer | [dtex] | 2532 | 3288 |
| Reisskraft | [N] | 137.0 | 177.6 |
| Bruchdehnung | [%] | 17.2 | 16.7 |
| Impr.Kord | | | |
| Titer | [dtex] | 2656 | 3472 |
| Reisskraft | [N] | 141.8 | 183.3 |
| Behandlungsgew. | [%] | 2.3 | 3.1 |
| Festigkeit | [cN/tex] | 52.7 | 53.3 |
| Bruchdehnung | [%] | 15.4 | 16.2 |
| Bezugs-Dehnung*) | [%] | 4.8 | 4.5 |
| TS bei 160°C | [%] | 1.3 | 1.8 |
| Summe(Bez.Dehn.+TS160) | [%] | 6.1 | 6.3 |
| In Gummi-Tests | | | |
| Strip Pull | [daN] | 20.5 | 25.0 |
| Appearence | | 3.25 | 3.5 |

*) je nach Titer 44-N- (1100) bzw. 57N-Dehnung (1440)

Ein derart hergestelltes Filament weist nicht nur eine hohe Dimensionsstabilität von mehr als 24000 $cN^2/tex^2$ auf, sondern hat als Kord zudem vorzügliche Hafteigenschaften im Gummi. Üblicherweise stellt man beim Imprägnierprozess einen Reisskraftverlust des Kords im Vergleich zum Rohkord fest. Der verfahrensgemäss aus dem präadhärisierten Filament hergestellte Kord zeigt nicht nur keinen derartigen Verlust sondern sogar einen Behandlungsgewinn von mehr als 2 %.

Er ist besonders zur Herstellung von Automobil- und Flugzeugreifen sowie zu Blachen, Schläuchen, Förderbändern und Keilriemen geeignet.

**Patentansprüche**

1. Verfahren zur Herstellung eines präadhärisierten Polyesterfilaments mit Hafteigenschaften an Gummi, wobei ein Präadhärisierungsmittel vor dem Verstrecken aufgetragen wird, dadurch gekennzeichnet, dass nach dem Auftrag einer Spinnpräparation 0.05 bis 0.20 Gew.% des Präadhärisierungsmittels, bezogen auf das Polyesterfilament, in einer ersten Verfahrensstufe auf ein mit wenigstens 3200 m/min gesponnenes POY-Polyesterfilament aufgetragen werden, das POY, das einen Kochschrumpf weniger als 20 % aufweist, anschliessend aufgespult, in einer weiteren Verfahrensstufe auf der POY-Spule bei 50-90°C während 3-5 Tagen heissluftbehandelt und in einer weiteren Verfahrensstufe abgespult, einstufig verstreckt und anschliessend aufgewickelt wird.

2. Verfahren nach Anspruch 1, dadurch gekennzeichnet, dass die Verstreckung einstufig mittels eines kalten Lieferwerkes (8,9), eines Streckstiftes (10), eines Heizers (11) und eines kalten Streckwerkes (12,13) durchgeführt wird.

3. Präadhärisiertes Polyesterfilament hergestellt nach dem Verfahren gemäss den Ansprüchen 1 und 2, gekennzeichnet durch eine Festigkeit (Ft) von 60 bis 70 cN/tex und einen Thermoschrumpf (=TST) bei 190° C von weniger als 3.5 %, bezogen auf die Länge des ungeschrumpften Garns nach dem Tempern unter Last von 0.4 cN/dtex bei 235°C während 60 Sekunden und Messen unter einer Spannung von 0.01 cN/tex mit einer Aufheizgeschwindigkeit von 20 K/min sowie eine Dimensionsstabilität (DS) von mehr als 24000 cN$^2$/tex$^2$.

4. Reifenkord, welcher unter Verwendung eines imprägnierten präadhärisierten Polyesterfilaments nach Anspruch 3 hergestellt wurde, dadurch gekennzeichnet, daß er nach der Präparation aus einem vulkanisierten fertigen Reifen eine Gummihaftung (Pull) von 18 daN bis 25 daN, eine Appearance Note von 2.5 bis 4.0, eine Dimensionsstabilität DS von mehr als 24000 cN$^2$/tex$^2$ (DS=Festigkeit spez. Anfangsmodul/TST) und eine Reisskraft, die nach dem Imprägnieren grösser oder mindestens gleich gross ist wie vor dem Imprägnieren, aufweist.

## Claims

1. Process for producing a pre-adherized polyester filament yarn having adhesion properties on rubber by applying a pre-adherizer before drawing, characterized in that, after application of a spin finish, 0.05 to 0.20% by weight of the pre-adherizer, on weight of fibre, is applied in a first process stage to a POY polyester filament yarn spun at not less than 3200 m/min, the POY, which has a boiling water shrinkage value of less than 20%, is then wound up, treated with hot air at 50 - 90°C for 3 - 5 days on the POY package in a further process stage and unwound, drawn in a single stage and then wound up in a further process stage.

2. Process according to Claim 1, characterized in that the drawing is carried out in a single stage by means of a cold feed roller system (8, 9), a snubbing pin (10), a heater (11) and a cold drawing roller system (12, 13).

3. Pre-adherized polyester filament yarn produced by the process according to Claims 1 and 2, characterized by a tenacity of from 60 to 70 cN/tex and a hot air shrinkage (=HASH) at 190°C of less than 3.5%, based on the length of the unshrunk yarn following heat treatment under a load of 0.4 cN/dtex at 235°C for 60 seconds and measuring under a tension of 0.01 cN/tex at a heating-up rate of 20 K/min, and also a dimensional stability (DS) of more than 24,000 cN$^2$/tex$^2$.

4. Tyre cord produced using an impregnated pre-adherized polyester filament according to Claim 3, characterized in that it has a rubber adhesion (pull) of from 18 daN to 25 daN, an appearance rating of from 2.5 to 4.0, a dimensional stability DS of more than 24,000 cN$^2$/tex$^2$ (DS=tenacity x specific initial modulus/ HASH) and a breaking strength which after impregnation is greater than or at least equal to that before impregnation.

## Revendications

1. Procédé pour la fabrication d'un filament polyester préadhérisé avec des caractéristiques d'adhérence au caoutchouc, par lequel un agent de préadhérisation est appliqué avant la phase d'étirage, caractérisé en ce que, après l'application d'un ensimage de filature, 0.05 à 0.20 % en poids d'agent de préadhérisation, calculé à partir du filament polyester, est appliqué dans une première étape du procédé sur un fil polyester POY filé à une vitesse au moins égale à 3200 m/mn, que ce fil POY qui possède un retrait à l'eau bouillante inférieur à 20 % est ensuite bobiné puis, dans une étape supplémentaire du procédé, traité thermiquement sur la bobine POY à 50-90°C pendant 3-5 jours puis, dans une étape supplémentaire du procédé déroulé, étiré en une étape et finalement rebobiné.

2. Procédé selon la revendication 1, caractérisé en ce que l'étirage en une étape est réalisé à l'aide d'un délivreur froid (8, 9), d'un pivot d'étirage (10), d'une plaque chauffante (11) et d'un système d'étirage froid (12, 13).

3. Fil polyester préadhérisé fabriqué selon le procédé défini dans les revendications 1 et 2, caractérisé par une ténacité (Ft) de 60 à 70 cN/tex, un retrait thermique (=TST) à 190°C inférieur à 3.5 %, calculé à partir de la longueur du fil non rétracté après le traitement de recuit sous une charge de 0.4 cN/dtex à 235°C pendant 60 secondes et la mesure sous une tension de 0.01 cN/tex avec vitesse d'élévation de la température de 20 K/min, ainsi qu'une stabilité dimensionnelle (DS) supérieure à 24000 cN$^2$/tex$^2$.

4. Corde pour pneumatiques, après la préparation d'un pneu fini vulcanisé, ayant été produite par l'utilisation d'un filament polyester préadhérisé imprégné selon la revendication 3, caractérisée en ce qu'elle possède une adhérence au caoutchouc (Pull) de 18 daN à 25 daN, une Appearance Note de 2.5 à 4.0, une stabilité dimensionnelle DS supérieure à 24000 cN$^2$/tex$^2$ (DS = Ténacité x module initial spécifique / TST) et une résistance à la rupture qui après l'imprégnation est plus élevée ou au moins aussi élevée qu'avant l'imprégnation.